# EUROPEAN PATENT APPLICATION

(11) **EP 3 797 954 A1**
(43) Date of publication of application: **31.03.2021**
(21) Application number: 19808398.2
(22) Date of filing: 10.04.2019
(51) Int. Cl.: B28D 7/00, B28D 5/00, C03B 33/037

(54) **SCRIBINGE DEVICE**

(30) Priority: 23.05.2018 JP 2018098618
(71) Applicant: Mitsuboshi Diamond Industrial Co., Ltd., Settsu Osaka 566-0034 (JP)
(72) Inventor: OKUDA Osamu, Settsu city, Osaka 5660034 (JP)
(74) Representative: TBK
(86) International application number: PCT/JP2019/015626
(87) International publication number: WO 2019/225189

(57) **Abstract**

A scribe apparatus which further improves productivity, tool compatibility, and fool-proof functionality is provided.

A scribe apparatus (1) of the present invention has mount means (3) where a brittle material substrate (2) is mounted, a scribe head (7) provided so as to be opposed to the brittle material substrate (2) on the mount means (3), a holder joint (19) provided at a tip of the scribe head (7), a scribing tool (8) removably attached to the holder joint (19) and including a scribing wheel (9) which forms a scribe line on the brittle material substrate (2) on the mount means (3), and a tool change mechanism (30) which performs tool replacement by removing the scribing tool (8) after use from the holder joint (19) and attaching another scribing tool (8) to the holder joint (19), wherein the tool change mechanism (30) has a reading part which reads a code printed on the scribing tool (8).

## Description

### Technical Field

The present invention relates to a technique regarding scribe apparatus for scribing a brittle material substrate and, in particular, to a check technique for checking, whether a correct scribing tool is attached at the time of scribing tool replacement.

Conventionally, in a flat panel display and so forth such as a liquid-crystal display panel and a liquid-crystal projector substrate, a mother glass substrate is laminated in a manufacturing process, and is then divided into a single panel of a predetermined size.

To divide this brittle material substrate such as a mother glass substrate, a scribe process of forming a scribe line (vertical crack) in that substrate and a break process of causing the vertical crack to completely penetrate are preformed. Of these, in the scribe process, a scribe apparatus is used.

In this scribe apparatus, a scribing tool using a scribing wheel or diamond point is provided. By that scribing tool, a vertical crack is formed on the brittle material substrate.

As a technique regrading a scribe apparatus for scribing a brittle material substrate, there is, for example, one disclosed in PTL 1.

PTL 1 has an object as follows. By using a chip holder (scribing tool) integrated with a chip (such as a scribing wheel), offset data is retained in the chip holder in code form, thereby solving problems such as, for example, burdens of operations of correcting an offset amount, erroneous attachment of a chip of a different type, and the occurrence of variability of the formation position of a scribe line.

Specifically, the chip is rotatably attached to the chip holder. The chip holder is configured to have a cylindrical shape, with its tip provided with an attachment part. An opening is provided to a holder joint, and the chip holder is absorbed by a magnet for attachment, thereby facilitating attachment and detachment. Also, on a surface of the chip holder, offset data of the chip is recorded as a two-dimensional code. At the time of replacing the chip holder, the offset data is read and inputted to the scribe apparatus, thereby cancelling an offset. This omits operation required in association with correction when the chip holder is attached or detached, thereby allowing chip replacement while the apparatus is stopped for a short period of time.

### Citation List

### Patent Literature

PTL 1: Domestic Re-publication of PCT International Publication for Patent Application No. 2007-063979

### Summary of Invention

### Technical Problem

The scribe apparatus disclosed in PTL 1 has solved the above-described problems, and has gained popularity as an apparatus easy to use for a person skilled in the art.

However, requirements for the scribe apparatus are increasing year after year. For example, automatically replacing a scribing tool during operation to extend continuous operating time, reducing automatic replacement time to a short period of time to enhance productivity, and so forth are demanded. In addition, at the time of scribing tool replacement, if a wrong tool (incorrect tool) is attached, appropriate scribing cannot be made and, not only that, even the scribing toll and the brittle material substrate may also be damaged. Thus, as for scribing tool replacement, it is imperative to provide fool-proof functionality (designing in consideration of safety so as not to let an operator perform erroneous operation or not to cause a hazardous situation even if a user performs erroneous operation) in order to improve reliability at the time of automatic scribing tool replacement operation.

Thus, in view of the above-described problems, an object of the present invention is to provide a scribe apparatus capable of further improving tool replaceability and fool-proof functionality at the time of tool replacement.

### Solution to Problem

To achieve the above-described object, the following technical measures are taken in the present invention.

The scribe apparatus according to the present invention has mount means where a brittle material substrate is mounted, a scribe head provided so as to be opposed to the brittle material substrate on the mount means, a holder joint provided at a tip of the scribe head, a scribing tool removably attached to the holder joint and including a scribing wheel which forms a scribe line on the brittle material substrate on the mount means, and a tool change mechanism which performs tool replacement by removing the scribing tool after use from the holder joint and attaching another scribing tool to the holder joint, wherein the tool change mechanism has a reading part which reads a code printed on the scribing tool attached to the holder joint.

Preferably, a two-dimensional code is printed at a tip part of the scribing tool, and the reading part is configured of a two-dimensional code reader which optically reads the two-dimensional code.

Preferably, the reading part is installed at a position where the two-dimensional code printed on the scribing tool can be read diagonally below.

### Advantageous Effects of Invention

According to the present invention, tool replaceability and fool-proof functionality at the time of tool replacement can be further improved.

### Brief Description of Drawings

FIG. 1 is a perspective view schematically depicting a general outline of a scribe apparatus of the present invention.
FIG. 2 is a side view of the scribe apparatus viewed from an A direction (y-axis direction).
FIG. 3 is a side view schematically depicting a general outline of a scribe head (enlarged C part).
FIG. 4 is a perspective view of a 2D code reader viewed from a front side.
FIG. 5 is a B-B cross-sectional view of the scribe apparatus.

### Description of Embodiment

In the following, an embodiment of a scribe apparatus 1 according to the present invention is described with reference to the drawings.

Note that the embodiment described below is one example embodying the present invention and this specific example does not limit the structure of the present invention. Also, as for the drawings, for the purpose of viewability, components are rendered as being partially omitted. Furthermore, an x-axis direction, a y-axis direction, a z-axis direction, and so forth in the scribe apparatus 1 are as depicted in the drawings.

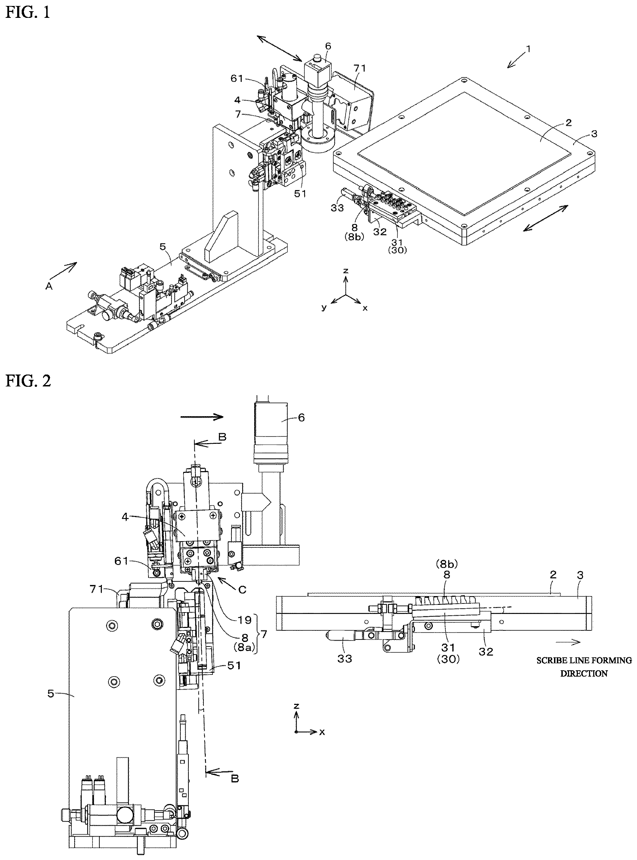

FIG. 1 and FIG. 2 are schematic diagrams of the scribe apparatus 1 according to the present invention.

The scribe apparatus 1 according to the present invention has a table (mount means) 3 where a brittle material substrate 2 is mounted, a head unit 4 which forms a scribe line (vertical crack) on the surface of the brittle material substrate 2, and a block body 5 where a remover 51 and so forth are arranged.

Note that a direction of forming a scribe line is the x-axis direction from the left side to the right side in FIG. 2.

The table 3 is supported from below by a supporting part (not depicted) with a motor incorporated therein. The supporting part is mounted on a movable carriage. The movable carriage (not depicted) is held so as to be movable along paired guide rails (not depicted) to the y-axis direction. This movable carriage is screwed with a ball screw (not depicted) and, with the ball screw rotating by driving of the motor, moves along the guide rails to the y-axis direction.

The motor (not depicted) in the supporting part is to rotate the table 3 on an x-y plane for positioning at a predetermined angle. The brittle material substrate 2 mounted on the table 3 is held by a vacuum suction means (not depicted) or the like. Also, a camera 6 for taking an image of an alignment mark on the brittle material substrate 2 is provided to an upper part of the head unit 4.

In the scribe apparatus 1, a beam (not depicted) is laid by a pole (not depicted) along the x-axis direction so as to go across the movable carriage and the table 3 thereabove.

The head unit 4 can move to the x-axis direction along a guide (not depicted) provided to the beam by driving of the motor. At a tip part of the head unit 4, a scribe head 7 is attached. Furthermore, the head unit 4 can also move to the z-axis direction.

As depicted in FIG. 2, the head unit 4 is placed as being tilted so as to slightly fall down into the direction of forming a scribe line. In the present embodiment, the head unit 4 is placed as being tilted rearward by 2° with respect to the direction of forming a scribe line (traveling direction).

The scribe head 7 has a scribing tool 8 which forms a scribe line on the surface of the brittle material substrate 2 and a holder joint 19 which removably holds the scribing tool 8.

This scribe head 7 is also placed as being tilted so as to slightly fall down into the direction of forming a scribe line (left side→right side in FIG. 2, the x-axis direction). In the present embodiment, the scribe head 7 is placed as being tilted rearward by 2° with respect to the direction of forming a scribe line.

Here, a y-axis moving part which moves the table 3 to the y-axis direction is formed of the paired guide rails which guide the movable carriage, the ball screw screwed into the movable carriage, and the motor which rotates the ball screw.

Also, an x-axis moving part which moves the head unit 4 to the x-axis direction is formed of the beam going across and above the table 3, a pole supporting the beam, and the guide which guides the head unit 4. Also, the motor in the supporting part is a rotating part which rotates the table 3.

These y-axis moving part, x-axis moving part, and rotating part configure a relative moving part.

Next, the scribing tool 8 (which hereinafter may be simply referred to as a tool 8) to be attached to the holder joint 19 is described.

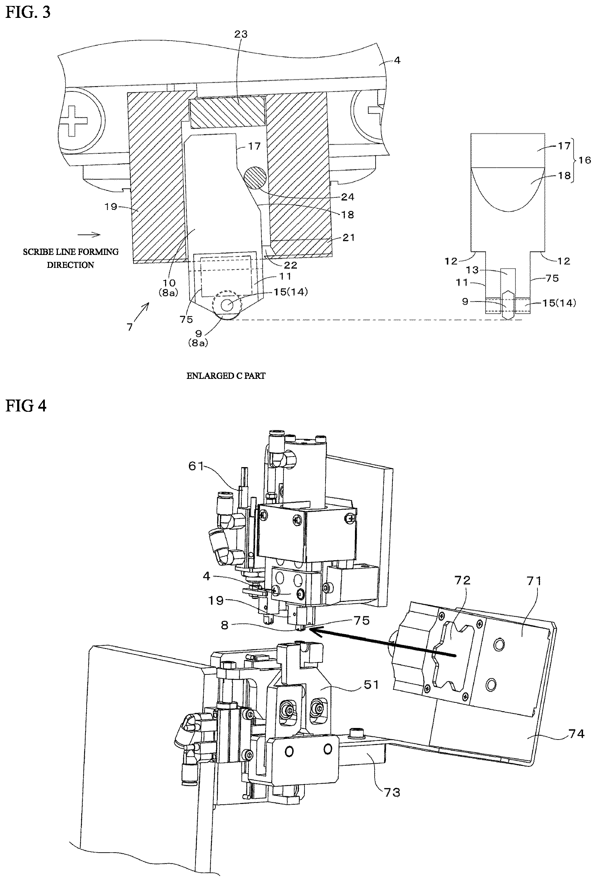

As depicted in FIG. 3, the tool 8 has a scribing wheel 9 which forms a scribe line (vertical crack) on the brittle material substrate 2 and a main body part 10 which supports the scribing wheel 9.

Note in the following description that the scribing wheel 9 may be simply referred to as a wheel.

As with the scribe head 7, the tool 8 is also tilted so as to slightly fall down into the direction of forming a scribe line (left side→right side in FIG. 2, the x-axis direction). In the present embodiment, the tool 8 is placed as being tilted rearward by 2° with respect to the direction of forming a scribe line.

With the tool 8 (scribe head 7) placed as being tilted in this manner, a desired scribe line can be formed on the surface of the brittle material substrate 2. Also, shavings at the time of formation of a scribe line can be reduced.

The main body part 10 is a member in a substantially columnar shape, and is provided, on its one end (tip) side, with vertically-cutout flat side wall surface parts 11. The side wall surface parts 11 are provided in a pair so as to face each other. Above the side wall surface parts 11, a hood part 12 bulging outward in a radial direction is formed. Note that a two-dimensional code 75, which will be described further below, is printed on either of the side wall surface parts 11.

Between the paired side wall surface parts 11, a notched part 13 parallel to those side wall surface parts 11 is provided.

Also, at each of lower ends of the paired side wall surface parts 11, a pin groove 14 in a direction orthogonal to that surface is provided. Those paired pin grooves 14 face each other and are provided so as to penetrate through the notched part 13. In that notched part 13, the scribing wheel 9 is arranged.

The wheel 9 is a disk-shaped member, has a circumference portion whose cross section is in a triangular shape, and has a through hole at the center. The wheel 9 has a size on the order such that, for example, its diameter is 2.5 mm and its thickness is 0.5 mm.

The wheel 9 is rotatably supported about an axial center of a pin 15 inserted in a hole part with the center of the pin groove 14 and the center of the through hole aligned together.

On the other hand, on the other end (base end) side of the main body part 10, an attachment part 16 for positioning is provided. The attachment part 16 is formed by notching the main body part 10, and has a flat surface 17 and a tilted surface 18.

The flat surface 17 is formed at the base end of the main body part 10, and is set to be a surface in a direction orthogonal to the side wall surface parts 11. The tilted surface 18 is set to be a surface tilted downward from the flat surface 17 to a radially outward direction. These flat surface 17 and tilted surface 18 are provided in sequence.

The main body part 10 has a shape tapered upward from a midway part in the longitudinal direction. Note that the base end (upper part) of the main body part 10 is configured of a magnetic metal.

The wheel 9 and the main body part 10 are integrated in this manner to form the tool 8. That is, the tool 8 integrated by inserting the pin 15 into the pin grooves 14 to rotatably support the wheel 9 is replaced without being removed.

The tool 8 including the wheel 9 is attached to the scribe head 7 and, by a lifting part provided inside the head unit 4, a lifting motion is performed. Note that an example of the lifting part is a ball screw or the like.

Furthermore, in addition to the movement of the entire head unit 4 to the z-axis direction, even only the scribe head 7 can also move to the z-axis direction.

By a pressuring mechanism separate from that lifting part, the wheel 9 having a pointed portion is rolled as being in pressure contact with the surface of the brittle material substrate 2 with an appropriate load, thereby forming a scribe line. The pressing pressure of the tool 8 is given by a cylinder.

Next, the holder joint 19 is described.

The holder joint 19 has an upper part formed of a columnar member and a lower part formed of a cylindrical member. Note that the holder joint 19 is set to be a cylindrical shape with its lower part larger than its upper columnar member.

The holder joint 19 has, at its upper part, a bearing 20 attached as fitting therearound and, by that bearing 20, is supported so as to be rotatable about an axial center in a substantially vertical direction (refer to FIG. 3).

The lower part of the holder joint 19 forms a holding part 21 which holds the tool 8, and has a cylindrically-shaped opening 22 formed therein. At an upper end of that opening 22, a magnet 23 is buried.

Also, inside the opening 22, a parallel pin 24 in a direction orthogonal to the center axis is provided at a position away from the center axis. The parallel pin 24 is to position the tool 8 by making contact with the tilted surface 18 of the tool 8, that is, to set the direction of the wheel 9 to a correct direction.

When the tool 8 is attached to the holder joint 19, the tool 8 is inserted from an attachment part 16 side into the opening 22 of the holder joint 19. Then, the tip (base end) side of the tool 8 configured of a magnetic metal is attracted by the magnet 23 to be fixed to the holder joint 19.

Furthermore, the flat surface 17 becomes oriented to a parallel pin 24 side, and the tilted surface 18 makes contact with the parallel pin 24 to be positioned and fixed. That is, since the flat surface 17 and the tilted surface 18 are oriented only to one direction, the direction of wheel 9 is set to be a predetermined direction.

This tool 8 is merely attracted by the magnet 23 and fixed to the holder joint 19, and is thus extremely easily attached and detached. That is, when attached, the tool 8 is attracted and is thereby fixed at a predetermined position and, also when replaced, the tool 8 can be easily detached only by being pulled. The tool 8 can be also manually attached and detached.

The magnet 23 is set to pull the tool 8 when positioned 3 mm to 4 mm back from a final set position of the holder joint 19.

Meanwhile, the scribe apparatus 1 of the present invention has a tool change mechanism 30 which removes the scribing tool 8 after use from the holder joint 19 and attaches another scribing tool 8 to the holder joint 19 to automatically perform tool replacement.

The tool change mechanism 30 has a cartridge 31 where the tool 8 is accommodated, a remover 51 which removes the tool 8 from the holder joint 19, a transfer nozzle 61 which moves the tool 8 between the scribe head 7 and the cartridge 31, and a 2D code reader 71 which read a two-dimensional code 75 of the tool 8 attached to the scribe head 7 (holder joint 19).

The present invention is characterized in the 2D code reader 71 (reading part) included in the scribe apparatus 1.

In the following, the structure of the 2D code reader 71 is described in detail.

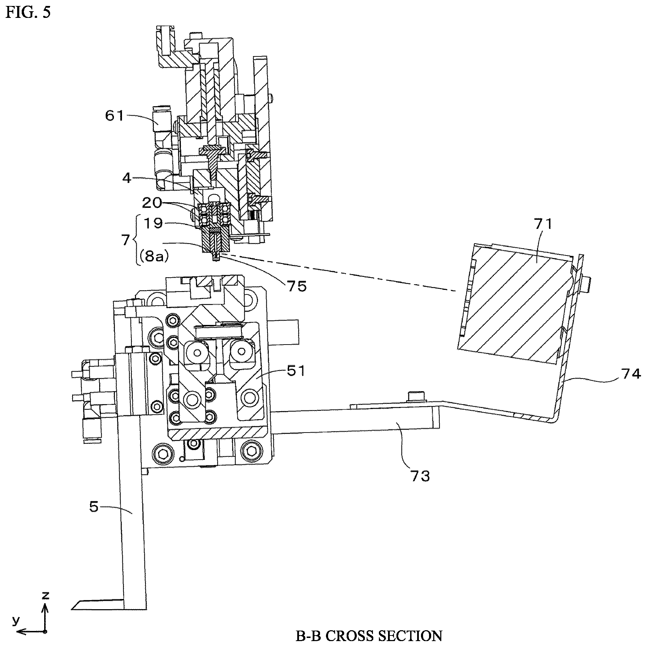

As depicted in FIG. 4 and FIG. 5, the 2D code reader 71 is a device which remotely and optically reads the 2D code 75 (two-dimensional code) having a substantially quadrangular shape.

On a front surface (a surface opposed to a target) of the 2D code reader 71, a protective glass plate 72 is arranged. Inside the 2D code reader 71 and directly behind this glass plate 72, a lens part (not depicted) for taking an area image is arranged.

Also, on the front surface of the 2D code reader 71 and around the lens part, an illuminating part (not depicted) capable of emitting visible light or infrared light is incorporated. With the light from this illuminating part, the two-dimensional code 71 is brightly illuminated to allow a figure (printed information) of the two-dimensional code 75 to be acquired as a clear image.

The light passing through the lens part is gathered on an imaging part (not depicted) provided to the 2D code reader 71. The imaging part is configured of, for example, a CCD element.

The front surface of the 2D code reader 71 is positioned so as to take an image of the tip part of the tool 8 (new tool 8b) attached to the holder joint 19. Specifically, a support member 73 rearward extending from a lower part of the tool change mechanism 30 is provided.

This support member 73 is configured to extend straight rearward. From a tip part (rear end part) of the support member 73, a support plate 74 configured of a thin steel plate or the like is attached so as to extend further rearward, and this support plate 74 is bent midway upward to extend upward to form an "L shape (laterally-reversed L shape in FIG. 5)".

To this portion in an L shape extending upward, the rear surface of the above-described 2D code reader 71 is attached, and the front surface of the 2D code reader 71 is oriented to the tip part of the new tool 8b attached to the holder joint 19.

On one side of the tip part (side wall surface part 11) of the tool 8, the two-dimensional code 75 having information about the type, model number, and so forth of the tool 8 written therein is printed. This two-dimensional code 75 is in a state of being oriented to the 2D code reader 71 when the new tool 8b is attached to the holder joint 19.

The 2D code reader 71 reads this two-dimensional code 75 to determine whether a correct tool 8 (new tool 8b) is attached.

As depicted in FIG. 5, this 2D code reader 71 reads the two-dimensional code 75 not from its front surface but slightly diagonally below so as to correctly read the two-dimensional code 75 printed on the new tool 8b attached to the holder joint 19. By adopting this visual angle, direct reflected light at the illuminating part can be eliminated, allowing acquisition of the two-dimensional code 75 as a clear image.

Thus, regarding the support plate 74, a portion to be attached to the support member 73 is bent downward. This bent portion of the support plate 74 is bent so as to have an angle allowing the 2D code reader 71 to read the 2D code 75 printed at the tip part (side wall surface part 11) of the new tool 8b diagonally below.

Note that the degree of this bending can be changed as appropriate depending on the structure of the scribe apparatus 1.

Note that it is not preferable that a member configuring the scribe apparatus 1 (for example, a beam (not depicted) for movement and the transfer nozzle 61) is included in the visual field of the 2D code reader 71. Thus, it is very preferable that the 2D code reader 71 be installed at a position where these obstacles are not included in the visual field.

Next, the actuation mode of the scribe apparatus 1, in particular, the tool change mechanism 30 included in the scribe apparatus 1, is described.

The cartridge 31 having the plurality of tools 8 accommodated therein is set to the base 32 provided to the side of the table 3 and is fixed by the clamp 33.

The remover 51 is caused to ascend to be kept in an open state. The scribe head 7 (head unit 4) is moved above the remover 51 and is caused to descend to a position where the remover 51 can pick up the tool 8 (old tool 8a).

By causing the remover 51 to slightly descend, the remover 51 picks up the old tool 8a on the holder joint 19. As in a state of picking up the old tool 8a, the remover 51 is further caused to descend, and the old tool 8a is thereby pulled and removed from the holder joint 19.

The transfer nozzle 61 (head unit 4) is moved above the remover 51. The transfer nozzle 61 is brought closer to the remover 51. Then, the remover 51 is caused to ascend. Then, by vacuum suction of the transfer nozzle 61, the old tool 8a is suctioned into the transfer nozzle 61.

The transfer nozzle 61 (head unit 4) holding the old tool 8a is moved to the cartridge 31 to cause the old tool 8a to be accommodated in the cartridge 31. Next, the transfer nozzle 61 receives the new tool 8b from the cartridge 31. Also, the remover 51 is caused to ascend to be kept in an open state.

The transfer nozzle 61 (head unit 4) holding the new tool 8b is moved above the remover 51. The transfer nozzle 61 is caused to descend and pick up the new tool 8b, which is set to the remover 51.

The scribe head 7 (head unit 4) is moved above the remover 51 holding the new tool 8b, and is caused to slightly descend. The remover 51 is caused to ascend to insert the new tool 8b into the holder joint 19.

The remover 51 is further caused to ascend to release the new tool 8b for attachment to the holder joint 19. The new tool 8b is absorbed by the magnet 23 and positioned by the parallel pin 24. The two-dimensional code 75 is in a state of being oriented to the 2D code reader 71.

Note that the new tool 8b may be set in an accommodating part provided near the remover 51. In this case, when the scribe head 7 moves above the accommodating part having the new tool 8b accommodated therein and slightly descends, the accommodating part ascends by a predetermined height, and the new tool 8b is inserted into the holder joint 19. Then, the new tool 8b is absorbed by the magnet 23 to be attached to the holder joint 19.

Meanwhile, with respect to the new tool 8b picked up by the remover 51 or accommodated in the accommodating part, the holder joint 19 is brought close to a position approximately 2.5 mm back from a final set position. Also, in accordance with the tilt of the scribe head 7, the remover 51, the accommodating part, and the transfer nozzle 61 are all tilted by two degrees.

The two-dimensional code 75 printed on the new tool 8b is read by using the 2D code reader 71. From the read data (information about the type, model number, and so forth), it is checked whether the tool 8 is correct. If it is correct, the process proceeds to actual operation (scribing).

On the other hand, if the tool 8 attached to the holder joint 19 is not correct, replacement by a correct new tool 8b is performed, or the operator is notified of "a state in which a wrong tool is attached".

According to the present invention, when the old tool 8a is removed from the holder joint 19 and replaced by the new tool 8b, the two-dimensional code 75 having the information about the new tool 8b written therein is read by the 2D code reader 71 (reading part) to determine whether the correct tool 8 is attached. This function allows replaceability of the tool 8 and fool-proof functionality at the time of tool replacement to be reliably improved.

Note that the embodiment disclosed herein should be considered as being examples in all aspects and not restrictive.

In particular, in the embodiment disclosed herein, what is adopted as matters not clearly stated, for example, actuation conditions, operating conditions, dimensions and weights of structures, and so forth, is those that do not deviate from a range of normal implementation by a person skilled in the art and can be easily set by a normal person skilled in the art.

For example, while a type is exemplarily described in the present embodiment in which the head unit 4 is attached as being tilted by two degrees, there is another type in which the head unit 2 is attached as being oriented toward a vertical direction. Also in this case, the technique of the present application is applicable.

### Reference Signs List

- 1: scribe apparatus
- 2: brittle material substrate
- 3: table (mount means)
- 4: head unit
- 5: block body
- 6: camera
- 7: scribe head
- 8: scribing tool (tool)
- 8a: old tool
- 8b: new tool
- 9: scribing wheel (wheel)
- 10: main body part
- 11: side wall surface part
- 12: hood part
- 13: notched part
- 14: pin groove
- 15: pin
- 16: attachment part
- 17: flat surface
- 18: tilted surface
- 19: holder joint
- 20: bearing
- 21: holding part
- 22: opening
- 23: magnet
- 24: parallel pin
- 30: tool change mechanism
- 31: cartridge
- 32: base
- 33: clamp
- 51: remover
- 61: transfer nozzle
- 71: 2D code reader
- 72: glass plate
- 73: support member
- 74: support plate
- 75: 2D code (two-dimensional code)

## Claims

1. A scribe apparatus comprising:
mount means where a brittle material substrate is mounted;
a scribe head provided so as to be opposed to the brittle material substrate on the mount means;
a holder joint provided at a tip of the scribe head;
a scribing tool removably attached to the holder joint and including a scribing wheel which forms a scribe line on the brittle material substrate on the mount means; and
a tool change mechanism which performs tool replacement by removing the scribing tool after use from the holder joint and attaching another scribing tool to the holder joint, wherein
the tool change mechanism has a reading part which reads a code printed on the scribing tool.

2. The scribe apparatus according to claim 1, wherein
a two-dimensional code is printed at a tip part of the scribing tool, and
the reading part is configured of a two-dimensional code reader which optically reads the two-dimensional code.

3. The scribe apparatus according to claim 1 or 2, wherein
the reading part is installed at a position where the two-dimensional code printed on the scribing tool can be read diagonally below.
